# EUROPEAN PATENT SPECIFICATION

(11) **EP 4 382 185 B1**
(45) Date of publication and mention of the grant of the patent: **10.12.2025**
(21) Application number: 23207210.8
(22) Date of filing: 31.10.2023
(51) Int. Cl.: B01D 29/07, B01D 29/50, B01D 29/52

(54) **A FILTER CARTRIDGE**
FILTERPATRONE
CARTOUCHE FILTRANTE

(30) Priority: 06.12.2022 TR 202218653
(43) Date of publication of application: 12.06.2024
(73) Proprietor: Arçelik Anonim Sirketi, 34445 Istanbul (TR)
(72) Inventor: TARKUC, Simge, 34445 ISTANBUL (TR); ATAY, Mehmet Cemal, 34445 ISTANBUL (TR); ULGER, Zehra, 34445 ISTANBUL (TR); ARIGUL, Meryem, 34445 ISTANBUL (TR); KAYISDAG, Varol, 34445 ISTANBUL (TR)

(56) References cited:
- WO-A1-2019/081013
- KR-B1- 101 004 320
- US-A1- 2005 133 439
- US-A1- 2009 188 217
- US-A1- 2012 273 407

## Description

### Technical Field

The present invention relates to a system which provides that the active surface area of the reusable or disposable filters, which are to be used in the filter system with the aim of filtering the microfibers broken off from the textiles during the washing of the laundry and removing the same from the water released into the environment, to be washed and opened during the filtering step, and relates to the operation method of said system.

### State of the Art

In washing machines, the laundry is loaded into a drum disposed in a washing tub supplied with detergent-water mixture and is washed in the drum which is rotated. During the washing process, fibers separated from the laundry subjected to both mechanical and chemical effects are discharged, together with the water discharged at the end of the washing process, to the waste water line whereto the washing machine is connected. Each washing process causes approximately 1 milligrams of fibers to enter the waste water line together with the discharged water. It is determined that more than half of microplastic accumulation in the nature is caused by waste waters originating from washing machines. Especially, taking into account the damage caused by synthetic fibers and particles in the nature, it is observed that waste waters originating from washing machines causes a critical environmental pollution. Therefore, the use of filtering members which filter the washing water is becoming widespread.

Microfibers which pass from textile to water during the washing, rinsing, spin-drying or drying steps of the washing machines and the laundry washing/drying machine should be filtered independently of the user, without changing the washing/drying performance of the machine. The systems comprising reusable filter cartridges or disposable filter cartridges can be used for the filtering process. After the filtering step, wastes such as textile fibers, detergent residues and dirt accumulate on the filter surface of the cartridges. As the amount of accumulation increases, the time required for the filtering process increases, and after reaching a certain accumulation level, the filtering process comes to stops. In other words, the filtering process cannot be performed since the filter is full. In this case, if in a reusable form, the filled filter cartridge it should be cleaned and used again, and if in a disposable form, should be replaced with a new filter cartridge.

It is important to increase the frequency of changing the disposable filter and cleaning the reusable filter. Providing a solution which increases the usage time without losing the filter performance will increase filter usage.

In the state of the art Chinese Utility Model No. CN215137214U, a filter structure which is cleaned using backwash is disclosed.

In the state of the art document US2005133439, a blood filter assembly having multiple filtration regions is disclosed.

In the state of the art document US2009188217, a filter assembly which includes a compartmented housing structure having a plurality of inlets and an outlet is disclosed.

In the state of the art document KR101004320B1, a sediment filtering nonpoint pollutant reduction apparatus is disclosed.

In the state of the art document US2012273407, a vaned filtering element is disclosed.

In the state of the art document WO2019081013 discloses a method for operating a washing machine and a corresponding washing machine.

### Definition of the Figures

**Figure 1****:** is the general schematic view of the filter cartridge related to an embodiment of the present invention.
**Figure 2** - is the view of the filter structure providing the cleaning of the filter compartments successively supplied with water and the opposite filter surfaces related to another embodiment of the present invention.
**Figure 3** **-** is the operation method of the filter structure providing the cleaning of the filter compartments successively supplied with water and the opposite filter surfaces related to another embodiment of the present invention.
**Figure 4** **-** is the operation method of the filter structure providing the cleaning of the filter compartments simultaneously supplied with water and the opposite filter surfaces related to another embodiment of the present invention.
**Figure 5** **-** is the schematic view of the lateral filter surfaces in zig-zag form related to another embodiment of the present invention.
**Figure 6** **-** is the schematic view of the filter cartridge related to another embodiment of the present invention.

### Numbers of the Elements Illustrated in the Figures

- 1.: Filter cartridge
- 2.: Filter A dirty water inlet
- 3.: Filter B dirty water inlet
- 4.: Clean water outlet
- 5.: Filter A (first filter)
- 6.: Filter B (second filter)
- 7.: Three-way valve
- 8.: Pump
- 9.: First filter compartment
- 10.: Second filter compartment

### Brief Description of the Invention

The present invention relates to a system which provides that the active surface area of the reusable or disposable filters, which are to be used in the filter system with the aim of filtering the microfibers broken off from the textiles during the washing of the laundry and removing the same from the water released into the environment, to be washed and opened during the filtering step, and relates to the operation method of said system.

The amount of microfiber passing from the laundry into water/air varies depending on the type of laundry (cotton, linen, wool, synthetic, etc.), degree of use of the laundry (new, worn, slightly worn), type of detergent used (powder, liquid), loading type of the washing machine (from the top, from the side), and washing program (temperature, cycle). The filter structure disclosed by means of the present invention can be used with the washing, drying and washing/drying systems under all conditions, regardless of the factors given above, and ensures high microfiber retention capacity.

### Detailed Description of the Invention

The present invention provides that the active surface areas of the reusable or disposable filters are cleaned in order to filter the discharge water of the washing or washing/drying machines during the filtering step such that the filter cartridges are cleaned or replaced at longer intervals.

The filter structure, which provides the cleaning of the filter compartments supplied with water successively or simultaneously and of the opposite filter surfaces, enables the surface to be cleaned without receiving clean water from any network/line unlike the currently used backwash systems. Pollutants removed from the surface are directed towards the lower compartments with the effect of gravity. Thus, the upper compartments become open in a more efficient manner.

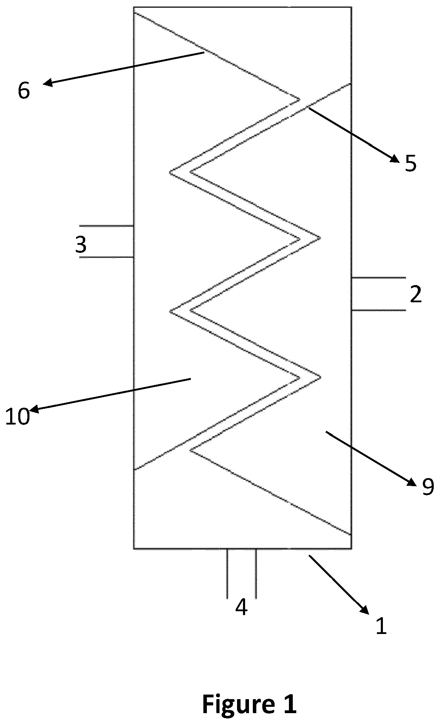

Figure 1 is the general view of the filter structure of the present invention. In the filter cartridge (1), two filter members (5,6) are placed face to face so as to form two filter compartments (9). The filter members are in zig-zag form. zig-zag-shaped filter members are placed one inside each other.

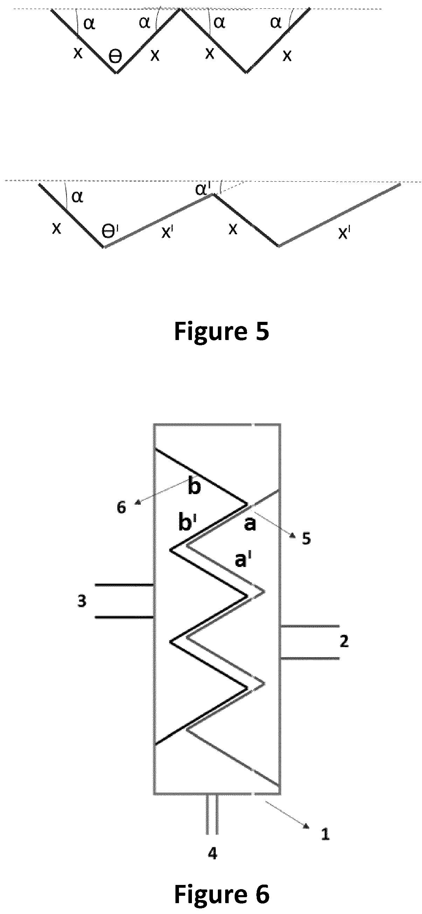

Directing the pollutants removed from the surface towards the lower compartments by the effect of gravity is achieved more effectively with the zig-zag-shaped filter. The zig-zag-shaped filter structures are shown in Figure 5. This effect is increased by using varied angles (α,Θ) between the lateral surfaces of the zig-zag-shaped filter. The length (x), surface area and angles of the surfaces forming the pyramid compartments may be equal (α). By widening the angle between the surfaces forming the pyramid, the slope of a surface is increased and the moved fibers are directed downwards by the effect of gravity.

The first filter/Filter A (5) and the second filter/Filter B (6) are active filter members coated with filter media having the same or different pore openings. The filter cartridge (1) comprises at least two water inlets (2, 3) which enable the intake of the discharge water containing microfiber and other pollutants simultaneously or successively. The first of the water inlets (2) provides entry to the first filter compartment (9) where the first filter member (5) is disposed, while the other water inlet (3) provides entry to the second filter compartment (10) where the second filter member (6) is disposed. The water purified from pollutants after the filtering step is discharged from the filter cartridge through the connection with the clean water outlet (4). Filtered water can be sent directly to the discharge line or can be delivered back to the tub. Filtered water can be discharged after performing closed loop filtering for a certain period of time.

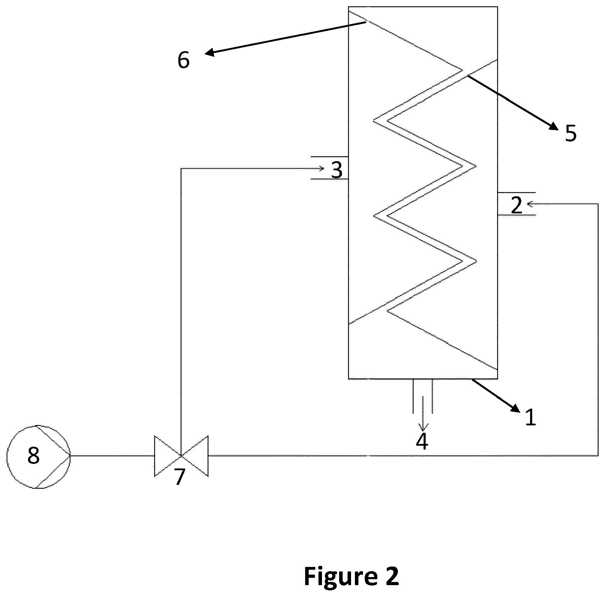

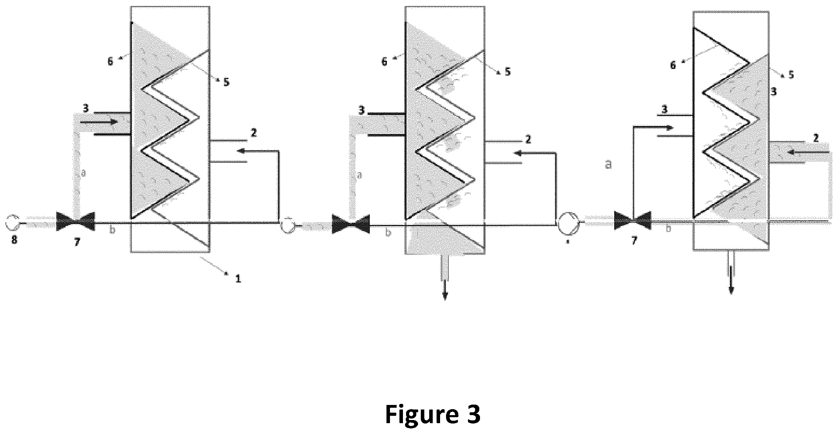

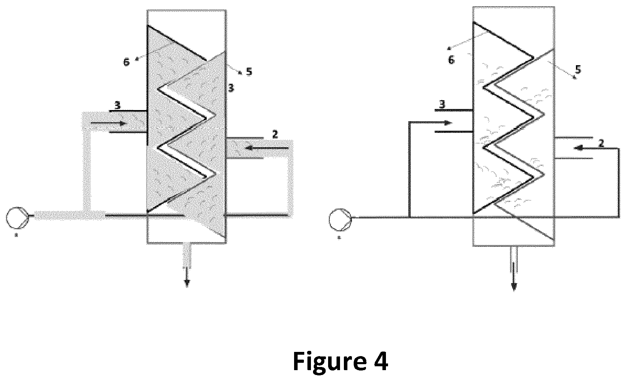

In an embodiment of the present invention, the water coming from the discharge line is supplied successively to the compartments containing the filter members (Figures 2 and 3), while in another embodiment, the discharge water to be filtered is supplied to the filter compartments simultaneously (Figure 4).

For the solution which enables the cleaning of the filter compartments supplied with water successively and the opposite filter surfaces, the discharge water is supplied successively to the filter compartments (9,10) by using the valve (7).

In the embodiment where the discharge water is supplied to the filter compartments simultaneously, the filter surface can be washed without the need for an additional component (valve, shutter, nozzle, etc.).

Since the filter surfaces in both systems are cleaned during the filtering step, this does not cause an extension in the program duration or an increase in energy and water consumption. Since no nozzle is used for washing, the problems such as dirty water clogging the nozzle head are eliminated.

The filter structure disclosed by the present invention can be placed in the machine or outside the machine.

A valve (7) which enables the water to be supplied successively to the filter compartments is used in the filter structure which enables the filter compartments supplied with water successively and the opposite filter surfaces to be cleaned (Figure 2). As shown in Figure 3, before the pump (8) is activated to supply the dirty water from the bottom of the tub to the filter compartments, the valve is opened in the direction of the second filter compartment (10) comprising the second filter member (6) (in direction a). By opening the valve (7) in this direction, the water is directed to the filter compartment (10) where the second filter member (6) is disposed through the entry point no. 3. The water filtered from the second filter member (6) is enabled to apply pressure on the surface of the first filter member (5) and as some filtered water passes through said surface, the fluff collected on the surface of the first filter member (5) is moved. After this flow continues for a certain period of time, the valve (7) is opened in the direction of the first filter compartment (9) (direction b) and the dirty water is directed to the filter compartment (9) comprising the first filter member (5). The water filtered from the first filter member (5) is enabled to apply pressure on the surface of the second filter member (6) and as some filtered water passes through said surface, the fluff collected on the surface of the second filter member (6) is moved. By moving the fluff collected on the surface, the filter surfaces are cleaned for the next filtering step.

In the filter structure, which enables the filter compartments supplied with water simultaneously and the opposite filter surfaces to be cleaned, there is no need to use an additional component (such as a valve) as the water is supplied to the filter compartments (9, 10) simultaneously. As shown in Figure 4, when the pump (8) is activated to supply the dirty water from under the tub to the filter, the water is supplied to both the first filter compartment (9) and the second filter compartment (10) simultaneously. During the filtering step, the fluff accumulated on the filter surfaces are moved by the pressure created by the filtered water on the opposite filter walls. The dirty water can be fed to both compartments continuously or intermittently (pump on-pump off). By moving the fluff collected on the surface, the filter surfaces are cleaned for the filtering step.

The configuration of the zig-zag filter compartments, which form the filter compartments supplied with water simultaneously, affects the flow rate of the filtered water. As shown in Figure 6, the filter surfaces of the same zig-zag filter element (6) differ depending on (i) the flow rate of "b" and "b 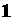 ", (ii) the amount and profile of solid waste accumulation (piling formation profile), and (iii) the downward direction of the water due to the effect of gravity. The same difference is also observed in the opposite filter system. As shown in Figure 6, the "b 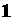 " surface of the second filter member (6) and the "a" surface of the first filter member (5) are operated against each other. The difference in the flow rate on said two surfaces causes a difference in the level of pressure applied to the opposite surface. Thus, the solid particles accumulated on the surface of the counter filter are moved. By changing the filter surface areas, length and angle, the flow rate difference and pressure force on the filter members are changed, thus increasing the washing efficiency.

## Claims

1. A water filter cartridge (1) suitable to be used with a washing machine comprising a first filter member (5) and a second filter member (6) positioned opposite each other, a first filter compartment (9) comprising the first filter member (5) and a second filter compartment (10) comprising the second filter member (6), a first filter compartment inlet (2) which provides the intake of dirty water into the first filter compartment, a second filter compartment inlet (3) which provides the intake of dirty water into the second filter compartment, and a clean water outlet (4) provided between the first and second filter compartments (9, 10), **characterized by** the first filter (5) and the second filter (6) having a plurality of lateral surfaces extending at an angle with respect to each other in a zig-zag form and the filter members being placed one inside each other.

2. A water filter cartridge (1) according to Claim 1, **characterized by** the first filter member (5) and the second filter member (6) which are configured to have the same permeability.

3. A water filter cartridge (1) according to Claim 1, **characterized by** at least two lateral surfaces having an obtuse angle therebetween.

4. A water filter cartridge (1) according to Claim 1 or Claim 3, **characterized by** the first filter (5) and the second filter (6) having at least two lateral surfaces with different lengths.

5. A laundry washer or washer- dryer washing machine comprising a water filter cartridge (1) according to any one of the above claims.

6. A washing machine according to Claim 5, **characterized by** a pump which provides the delivery of water to the first filter compartment inlet (2) and the second filter compartment inlet (3).

7. A washing machine (7) according to Claim 6, **characterized by** a valve (7) which is positioned between the pump (8) and the water filter cartridge (1).

8. A washing machine (1) according to Claim 7, **characterized by** the valve (7) being a three-way valve.

9. A washing machine (1) according to Claim 7 or Claim 8, **characterized by** the valve (7) which provides the supply of the water to the second filter compartment (10) and the first filter compartment (9) successively.

10. A method being used in a washing machine according to Claim 7 to Claim 9, comprising the steps of
a. directing the dirty water coming from the pump (8) to the second filter compartment inlet (3) via valve (7)
b. discharging the clean water through the clean water outlet (4)
c. directing the dirty water coming from the pump (8) to the first filter compartment inlet (2) via valve (7)
d. discharging the clean water through the clean water outlet (4).

11. A method according to Claim 10 being used in a washing machine according to Claim 7 to Claim 9, comprising the step of, before the step of discharging the clean water through the clean water outlet (4),
e. directing the dirty water coming from the pump (8) simultaneously to the second filter compartment inlet (3) and the first filter compartment inlet (2).

## Patentansprüche

1. Eine Wasserfilterkartusche (1), die zur Verwendung mit einer Waschmaschine geeignet ist, umfasst ein erstes Filterelement (5) und ein zweites Filterelement (6), die einander gegenüberliegend angeordnet sind, ein erstes Filterfach (9), das das erste Filterelement (5) umfasst, und ein zweites Filterfach (10), das das zweite Filterelement (6) umfasst, einen ersten Filterkammer-Einlass (2), der die Aufnahme von Schmutzwasser in die erste Filterkammer ermöglicht, einen zweiten Filterkammer-Einlass (3), der die Aufnahme von Schmutzwasser in die zweite Filterkammer ermöglicht, und einen Reinwasser-Auslass (4), der zwischen der ersten und der zweiten Filterkammer (9, 10) vorgesehen ist, **gekennzeichnet ist es dadurch,** dass der erste Filter (5) und der zweite Filter (6) eine Vielzahl von Seitenflächen aufweisen, die sich in einem Winkel zueinander in einer Zickzackform erstrecken, und dass die Filterelemente ineinander angeordnet sind.

2. Eine Wasserfilterkartusche (1), wie in Anspruch 1 aufgeführt, **ist dadurch gekennzeichnet, dass** das erste Filterelement (5) und das zweite Filterelement (6) so konfiguriert sind, dass sie die gleiche Durchlässigkeit aufweisen.

3. Eine Wasserfilterkartusche (1), wie in Anspruch 1 aufgeführt, **ist dadurch gekennzeichnet, dass** sie mindestens zwei Seitenflächen aufweist, zwischen denen ein stumpfer Winkel liegt.

4. Eine Wasserfilterkartusche (1), wie in Anspruch 1 oder 3 aufgeführt, **ist dadurch gekennzeichnet, dass** der erste Filter (5) und der zweite Filter (6) mindestens zwei Seitenflächen mit unterschiedlichen Längen aufweisen.

5. Eine Waschmaschine oder Waschtrockner-Waschmaschine umfassen eine Wasserfilterkartusche (1) gemäß einem der oben genannten Ansprüche.

6. Eine Waschmaschine, wie in Anspruch 5 aufgeführt, **ist dadurch gekennzeichnet, dass** eine Pumpe, die die Zufuhr von Wasser zum Einlass des ersten Filterfachs (2) und zum Einlass des zweiten Filterfachs (3) gewährleistet.

7. Eine Waschmaschine (7), wie in Anspruch 6 aufgeführt, **ist dadurch gekennzeichnet, dass** ein Ventil (7) zwischen der Pumpe (8) und der Wasserfilterkartusche (1) angeordnet ist.

8. Eine Waschmaschine (1), wie in Anspruch 7 aufgeführt, **ist dadurch gekennzeichnet, dass** das Ventil (7) ein Dreiwegeventil ist.

9. Eine Waschmaschine (1), wie in Anspruch 7 oder 8 aufgeführt, **ist dadurch gekennzeichnet, dass** das Ventil (7) die Wasserversorgung nacheinander zum zweiten Filterfach (10) und zum ersten Filterfach (9) sicherstellt.

10. Ein Verfahren, wie es in einer Waschmaschine gemäß Anspruch 7-9 verwendet wird, umfasst die folgenden Schritte:
a. das von der Pumpe (8) kommende Schmutzwasser über das Ventil (7) zum Einlass (3) des zweiten Filterfachs leiten
b. das saubere Wasser über den Reinwasserauslass ablassen (4)
c. das von der Pumpe (8) kommende Schmutzwasser über das Ventil (7) zum Einlass (2) des ersten Filterfachs leiten
d. das saubere Wasser über den Auslass (4) für sauberes Wasser ablassen.

11. Ein Verfahren wie in Anspruch 10 aufgeführt, das in einer Waschmaschine nach Anspruch 7 bis 9 verwendet wird, umfasst den Schritt, vor dem Schritt des Ablassens des sauberen Wassers durch den sauberen Wasserauslass (4),
e. das von der Pumpe (8) kommende Schmutzwasser gleichzeitig zum Einlass (3) des zweiten Filterfachs und zum Einlass (2) des ersten Filterfachs zu leiten.

## Revendications

1. Cartouche de filtre à eau (1), adaptée à une utilisation avec une machine à laver, comprenant un premier élément filtrant (5) et un second élément filtrant (6) positionnés en face l'un de l'autre, un premier compartiment de filtration (9) comprenant le premier élément filtrant (5) et un second compartiment de filtration (10) comprenant le second élément filtrant (6), une entrée du premier compartiment de filtration (2) permettant l'admission d'eau sale dans le premier compartiment, une entrée du second compartiment de filtration (3) permettant l'admission d'eau sale dans le second compartiment, et une sortie d'eau propre (4) située entre les premier et second compartiments de filtration (9, 10), **caractérisée par** le premier filtre (5) et le second filtre (6) comportant une pluralité de surfaces latérales s'étendant à un angle l'une par rapport à l'autre sous une forme en zigzag, les éléments filtrants étant placés l'un à l'intérieur de l'autre.

2. Cartouche de filtre à eau (1) selon la Revendication 1, **caractérisée par** le premier élément filtrant (5) et le second élément filtrant (6) configurés pour avoir la même perméabilité.

3. Cartouche de filtre à eau (1) selon la Revendication 1, **caractérisée par** au moins deux surfaces latérales formant un angle obtus entre elles.

4. Cartouche de filtre à eau (1) selon la Revendication 1 ou 3, **caractérisée par** le premier filtre (5) et le second filtre (6) comportant au moins deux surfaces latérales de longueurs différentes.

5. Machine à laver ou lave-linge séchant comprenant une cartouche de filtre à eau (1) selon l'une quelconque des Revendications précédentes.

6. Machine à laver selon la Revendication 5, **caractérisée par** une pompe qui assure l'acheminement de l'eau vers l'entrée du premier compartiment de filtration (2) et l'entrée du second compartiment de filtration (3).

7. Machine à laver (7) selon la Revendication 6, **caractérisée par** une vanne (7) positionnée entre la pompe (8) et la cartouche de filtre à eau (1).

8. Machine à laver (1) selon la Revendication 7, **caractérisée par** la vanne (7) étant une vanne à trois voies.

9. Machine à laver (1) selon la Revendication 7 ou 8, **caractérisée par** la vanne (7) qui permet l'alimentation en eau du second compartiment de filtration (10) et du premier compartiment de filtration (9) successivement.

10. Procédé utilisé dans une machine à laver selon l'une des revendications 7 à 9, comprenant les étapes suivantes :
a. diriger l'eau sale provenant de la pompe (8) vers l'entrée du second compartiment de filtration (3) via la vanne (7),
b. évacuer l'eau propre par la sortie d'eau propre (4),
c. diriger l'eau sale provenant de la pompe (8) vers l'entrée du premier compartiment de filtration (2) via la vanne (7),
d. évacuer l'eau propre par la sortie d'eau propre (4).

11. Procédé selon la Revendication 10, utilisé dans une machine à laver selon l'une des Revendications 7 à 9, comprenant, avant l'étape d'évacuation de l'eau propre par la sortie d'eau propre (4), l'étape suivante :
e. diriger l'eau sale provenant de la pompe (8) simultanément vers l'entrée du second compartiment de filtration (3) et l'entrée du premier compartiment de filtration (2).
